# EUROPEAN PATENT APPLICATION

(11) **EP 2 113 995 A1**
(43) Date of publication of application: **04.11.2009**
(21) Application number: 08710477.4
(22) Date of filing: 25.02.2008
(51) Int. Cl.: H02M 3/155, H02J 7/00

(54) **ELECTRIC POWER SOURCE DEVICE**

(30) Priority: 28.02.2007 JP 2007048740
(71) Applicant: Panasonic Corporation, Kadoma-shi Osaka 571-8501 (JP)
(72) Inventor: YOSHIDA, Koji, Chuo-ku, Osaka-shi, Osaka 540-6207 (JP)
(74) Representative: Schwabe - Sandmair - Marx
(86) International application number: PCT/JP2008/000324
(87) International publication number: WO 2008/105161

(57) **Abstract**

An electric power source device includes a direct current voltage source 10, a capacitor 13 connected in series with direct current voltage source 10, a DC/DC converter 19 connected to supply and receive energy between direct current voltage source 10 and capacitor 13, and a high voltage load 15 connected to both ends of a series circuit of direct current voltage source 10 and capacitor 13. A control circuit 33 of DC/DC converter 19 supplies electric power from capacitor 13 to direct current voltage source 10 when electric power is supplied to high voltage load 15 so as to reduce an electric current to be output from direct current voltage source 10 and to lighten the burden imposed on the direct current voltage source.

## Description

### TECHNICAL FIELD

The present invention relates to an electric power source device that lightens the burden imposed on a direct current voltage source with respect to a large amount of electric power.

### BACKGROUND ART

In recent years, with the increasing trend of global environment protection, electrical power steering has come into wide use in a car (hereinafter, referred to as vehicle). In the electrical power steering, since a motor assists a steering wheel operation, it is not necessary to drive a hydraulic pump, unlike the related art, and thus the burden imposed on the engine is lightened. As a result, the electrical power steering is effective in improving fuel efficiency.

However, a high degree of torque is needed for the steering wheel operation, and the motor and the driving circuit of the electrical power steering system consume a large amount of electric power in the order of several kW in a pulsed manner. In this case, a motor that operates with a high driving voltage is used, and thus the amount of electric current value can be reduced. For this reason, an electric power loss can be suppressed at the time of electric power transmission, and the fuel efficiency can be further improved.

In order to operate a motor with a high driving voltage, Patent Document 1 discloses an electric power source device in which a capacitor serving as a capacitive element is connected in series with a battery serving as a direct current voltage source. Therefore, the sum of a voltage of the battery and a voltage of the capacitor is applied to the motor, and thus the motor can operate with a high voltage.

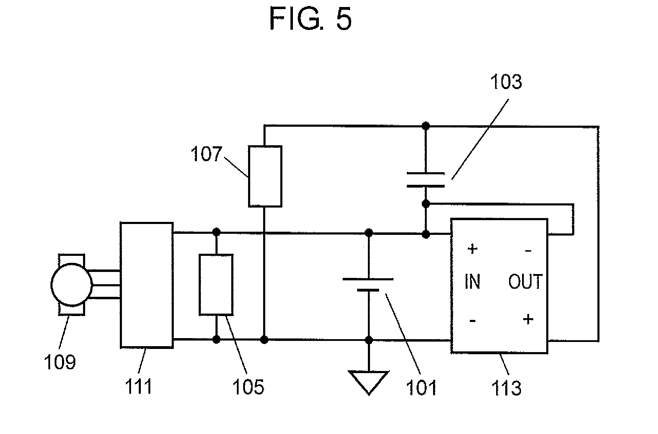

Fig. 5 is a block circuit diagram of the electric power source device described in Patent Document 1. The electric power source device shown in Fig. 5 is configured not to operate a load with a high driving voltage, but to suppress a change in voltage of the battery voltage caused by a capacitor so as to supply stable electric power to a load with a narrow allowable voltage range. Since the circuit configuration is the same as a case where a load with a high driving voltage operates, a known electric power source device of this type will be described with reference to Fig. 5.

Referring to Fig. 5, capacitor 103 serving as a capacitive element is connected in series with battery 101 serving as a direct current voltage source. Low voltage load 105, such as an audio system or a car navigation, which can be driven with a voltage of battery 101, is connected to both ends of battery 101. A load (hereinafter, referred to as high voltage load 107), such as a power steering motor, which is driven with a high voltage, is connected to both ends of a series circuit of battery 101 and capacitor 103.

Power generator 109 that generates electric power using an engine (not shown) is connected to both ends of battery 101 through inverter 111 so as to charge battery 101. DC/DC converter 113 is connected to both ends of battery 101 and both ends of capacitor 103 so as to charge capacitor 103 such that the former is on the input side and the latter is on the output side.

Next, the operation of the electric power source device of Fig. 5 will be described. During normal vehicle driving, low voltage load 105 is driven with the electric power of battery 101. In this case, when capacitor 103 is not in a full charged state, DC/DC converter 113 is driven to boost the voltage of battery 101 and to supply electric power to capacitor 103, such that capacitor 103 is full-charged. If capacitor 103 is full-charged, DC/DC converter 113 stops.

In this state, the steering wheel operation is supposed to be carried out. Electric power is supplied to high voltage load 107, which has an electrical power steering motor and a driving circuit, from both battery 101 and capacitor 103, which makes it possible to drive high voltage load 107.

In the known electric power source device, high voltage load 107 that undoubtedly could not be driven only with battery 101 can be operated, but the voltage across both ends of capacitor 103 decreases with time due to constant power consumption of high voltage load 107. For this reason, in order to supply constant electric power to high voltage load 107, the current from battery 101 and capacitor 103 increases with time by the decreased amount of the voltage across both ends of capacitor 103. In this case, since capacitor 103 is excellent in the rapid charge/discharge characteristics, capacitor 103 has good adaptability with respect to the increase in the current, but the discharge current of battery 101 is limited. If a current near the limited current of battery 101 is discharged, the burden imposed on battery 101 may be increased and reliability may be degraded.

When battery 101 is charged, the charge current is limited. For this reason, if battery 101 is charged with a current near the limited current, the burden imposed on battery 101 may be increased and reliability may be degraded.
[Patent Document 1] Japanese Patent Unexamined Publication No. 2005-204421

### DISCLOSURE OF THE INVENTION

The invention has been finalized in order to solve the drawbacks inherent in the related art, and it is an object of the invention to provide a reliable electric power source device that can lighten the burden imposed on a battery (direct current voltage source).

An electric power source device of the invention includes a direct current voltage source, a capacitor connected in series with the direct current voltage source, a DC/DC converter having a control circuit configured to control the transfer of energy between the direct current voltage source and the capacitor, and a load connected to both ends of a series circuit of the direct current voltage source and the capacitor. The control circuit controls the DC/DC converter to supply electric power from the capacitor to the direct current voltage source when electric power is supplied to the load.

According to the electric power source device of the invention, when electric power is supplied to the load, electric power is supplied from the capacitor not only to the load, but only to the direct current voltage source. Therefore, a current from the direct current voltage source decreases so much, and thus there is no case where a large burden is imposed on the direct current voltage source.

An electric power source device of the invention includes a direct current voltage source, a capacitor connected in series with the direct current voltage source, a DC/DC converter having a control circuit configured to control the transfer of energy between the direct current voltage source and the capacitor, and a direct current generator connected to both ends of a series circuit of the direct current voltage source and the capacitor. The control circuit supplies electric power from the direct current voltage source to the capacitor when the direct current generator generates electric power.

According to the electric power source device of the invention, when the direct current generator generates electric power, the charge current that imposes a burden on the direct current voltage source can be charged in the capacitor. Therefore, a current that is input to the direct current voltage source decreases so much, and thus there is no case where a large burden is imposed on the direct current voltage source.

### BRIEF DESCRIPTION OF THE DRAWINGS

Fig. 1 is a block circuit diagram of an electric power source device according to a first embodiment of the invention.
Fig. 2 is a diagram illustrating a time-dependent change of the electric power source device of this embodiment.
Fig. 3 is a block circuit diagram of an electric power source device according to a second embodiment of the invention.
Fig. 4 is a diagram illustrating a time-dependent change of the electric power source device of this embodiment.
Fig. 5 is a block circuit diagram of a known electric power source device.

### DESCRIPTION OF REFERENCE NUMERALS AND SIGNS

- 10:: direct current voltage source
- 11:: direct current generator
- 13:: capacitor
- 15:: high voltage load
- 19:: DC/DC converter
- 27:: first switching element
- 29:: second switching element
- 31:: inductor
- 33:: control circuit

### PREFERRED EMBODIMENTS FOR CARRYING OUT THE INVENTION

Hereinafter, preferred embodiments for carrying out the invention will be described with reference to the drawings.

### First Embodiment

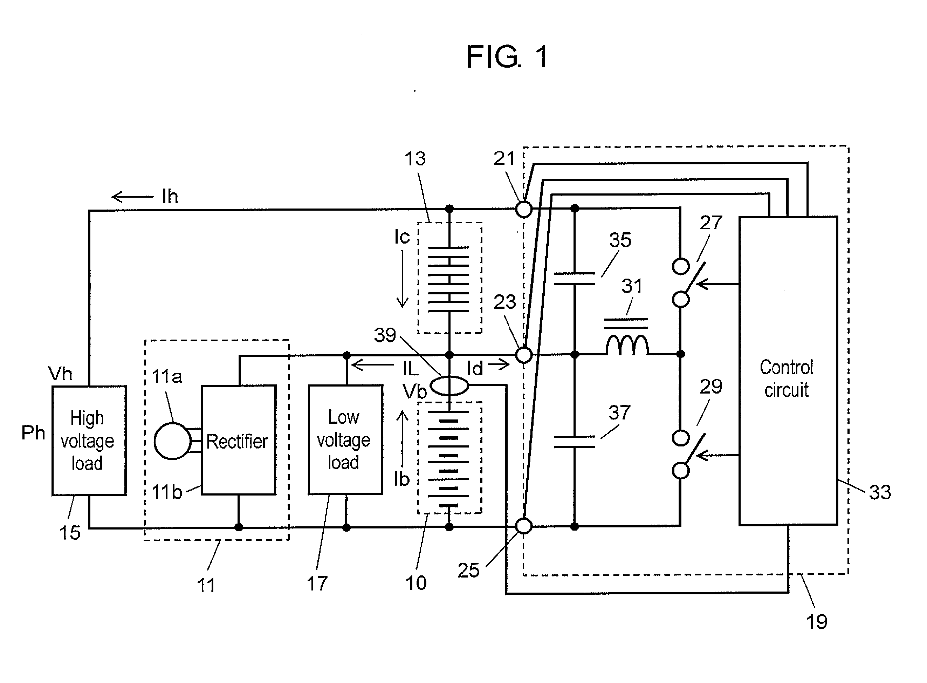

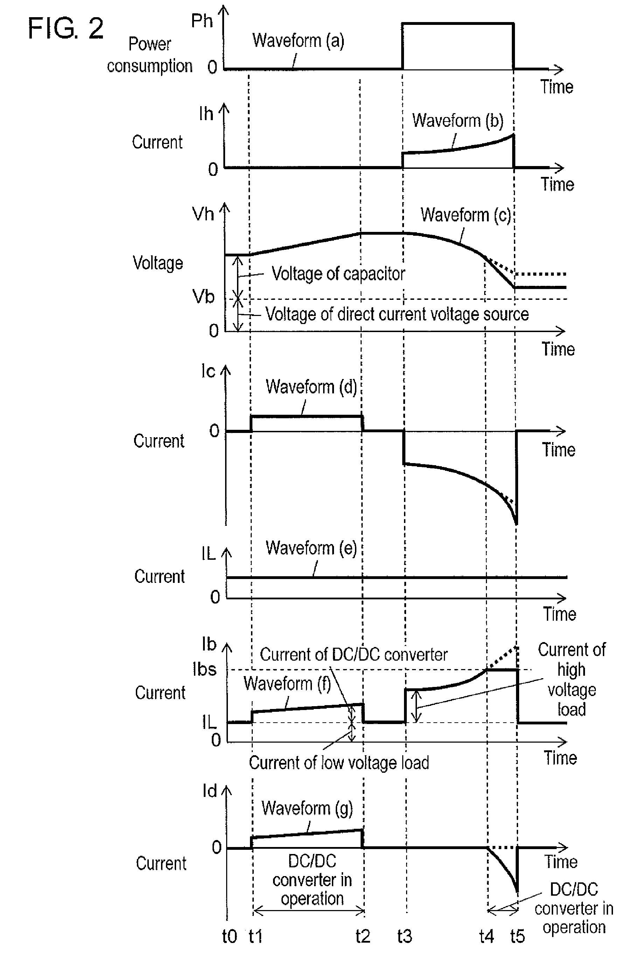

Fig. 1 is a block circuit diagram of an electric power source device according to a first embodiment of the invention. Fig. 2 is a diagram illustrating time-dependent changes in electric power, voltage, and current of the electric power source device of this embodiment. A waveform (a) shows a time-dependent change of power consumption Ph of a high voltage load. A waveform (b) shows a time-dependent change of a current Ih of the high voltage load. A waveform (c) is a time-dependent change chart of a voltage Vh of the high voltage load. A waveform (d) is a time-dependent change chart of a current Ic of a capacitor. A waveform (e) is a time-dependent change chart of a current IL of a low voltage load. A waveform (f) shows a time-dependent change of a current Ib of a direct current voltage source. A waveform (g) shows a time-dependent change of a current Id of a DC/DC converter. In Fig. 1, each arrow represents a current in each section, and the direction of the arrow is defined to be positive. In this embodiment, a description will be provided for an electric power steering equipped car.

In Fig. 1, direct current voltage source 10 is a battery that operates with a rated voltage of DC 12 V. Direct current generator 11 is connected to both ends of direct current voltage source 10. Direct current generator 11 includes alternating current generator 11a and rectifier 11b. With this configuration, direct current voltage source 10 is charged. Capacitor 13 that has a plurality of electric double layer capacitors is connected in series with direct current voltage source 10. The electric double layer capacitor operates with a low rated voltage of about 2.2 V. Therefore, a necessary voltage is obtained by series connection or parallel or series connection of a plurality of electric double layer capacitors.

High voltage load 15 serving as a load is connected to both ends of a series circuit of direct current voltage source 10 and capacitor 13. In this embodiment, high voltage load 15 includes an electrical power steering motor and a driving circuit. The driving circuit includes a DC/DC converter, an inverter, and the like, and generates signals necessary to drive and control the motor. The driving voltage of high voltage load 15 is in the range of about DC 20 to 30 V, and accordingly high voltage load 15 cannot be directly driven with the rated voltage (DC 12 V) of direct current voltage source 10. For this reason, the shortage in the voltage is filled by capacitor 13.

Low voltage load 17, such as an audio system or a navigation system, which normally consumes electric power, is connected to both ends of direct current voltage source 10. The driving voltage of low voltage load 17 is in the range of about DC 11 to 14 V. For this reason, low voltage load 17 is directly driven by direct current voltage source 10.

DC/DC converter 19 is connected between direct current voltage source 10 and capacitor 13 so as to supply and receive electrical energy between direct current voltage source 10 and capacitor 13. Specifically, a node of high voltage load 15 and capacitor 13 is connected to first input/output terminal 21 of DC/DC converter 19. A node of a positive electrode of direct current voltage source 10 and capacitor 13 is connected to second input/output terminal 23 of DC/DC converter 19. A negative electrode of direct current voltage source 10 is connected to common terminal 25 of DC/DC converter 19.

Next, the detailed configuration of DC/DC converter 19 will be described. First, both ends of a series circuit of first switching element 27 and second switching element 29 are connected in parallel with both ends of a series circuit of direct current voltage source 10 and capacitor 13, that is, to first input/output terminal 21 and common terminal 25, respectively. Inductor 31 is connected between a node of direct current voltage source 10 and capacitor 13, that is, second input/output terminal 23, and a node of first switching element 27 and second switching element 29.

Control circuit 33 is connected to first switching element 27 and second switching element 29 so as to perform on/off control of first switching element 27 and second switching element 29. Control circuit 33 also has a function to detect the voltage of first input/output terminal 21 and second input/output terminal 23 with respect to common terminal 25.

With the above-described configuration, DC/DC converter 19 operates. Meanwhile, in this embodiment, in addition to the above-described configuration, first smoothing capacitor 35 and second smoothing capacitor 37 that smooth an input/output voltage are connected between first input/output terminal 21 and second input/output terminal 23, and between second input/output terminal 23 and common terminal 25, respectively.

DC/DC converter 19 operates so as to charge an upper limit voltage (in this embodiment, DC 30 V) with which high voltage load 15 can be driven when the voltage of first input/output terminal 21 (the voltage Vh of high voltage load 15) is low. When the current Ib of direct current voltage source 10 increases equal to or more than a prescribed value described below, the charge current of DC/DC converter 19 to capacitor 13 is limited or the discharge current of capacitor 13 increases. In this way, the current Ib is controlled so as not to increase equal to or more than the prescribed value.

In order that the output current of direct current voltage source 10 is controlled by DC/DC converter 19, current sensor 39 is provided on the positive electrode side of direct current voltage source 10. The output of current sensor 39 is input to control circuit 33.

Next, the operation of the electric power source device of this embodiment will be described with reference to Fig. 2. In the waveforms (a) to (g) of Fig. 2, the horizontal axis denotes time.

First, at a time t0, it is assumed that the steering wheel operation is not carried out while the vehicle is being used, and high voltage load 15 is almost not operated. Therefore, as shown in the waveform (a), power consumption Ph of high voltage load 15 is very small and substantially becomes 0. For this reason, as shown in the waveform (b), the current Ih of high voltage load 15 substantially becomes 0.

In this case, it is supposed that capacitor 13 is not completely discharged and stores therein electric power to some extent. Therefore, the voltage of capacitor 13 has a certain value. Direct current voltage source 10 is a battery, and thus it always has a constant voltage Vb (for example, DC 12 V). Then, as shown in the waveform (c), the voltage Vh that is the sum of a voltage Vb of direct current voltage source 10 and the voltage of capacitor 13 is applied to high voltage load 15. In this state, since capacitor 13 is not charged/discharged, as shown in the waveform (d), the current Ic of capacitor 13 is 0.

Low voltage load 17 continues to be normally operated, and thus as shown in the waveform (e), the current IL of low voltage load 17 becomes constant without being affected by the time. The supply source of the current IL is only direct current voltage source 10 since, as described above, the current Ic of capacitor 13 is 0 and in this state, DC/DC converter 19 is also stopped. Therefore, as shown in the waveform (f), the current Ib of direct current voltage source 10 becomes equal to the current IL of low voltage load 17. Though the details will be described below, DC/DC converter 19 operates when capacitor 13 is charged, and when electric power is supplied from capacitor 13 to direct current voltage source 10 when electric power is supplied to high voltage load 15.

As described above, since DC/DC converter 19 is stopped, as shown in the waveform (g), the current Id of DC/DC converter 19 is 0. It is assumed that the current Id of DC/DC converter 19 is a current flowing in second input/output terminal 23.

In the above-described state, capacitor 13 is not full-charged, and accordingly sufficient electric power may not be supplied to high voltage load 15 when the steering wheel operation is carried out. Therefore, the steering wheel operation is not carried out, and DC/DC converter 19 operates at a time t1 at which power consumption Ph of high voltage load 15 is low, such that capacitor 13 is full-charged. Specifically, control circuit 33 reads the voltage of first input/output terminal 21 (corresponding to the voltage Vh), and performs alternate on/off control of first switching element 27 and second switching element 29 until the voltage reaches the upper limit voltage (DC 30 V) with which high voltage load 15 can be driven. In this way, electric power is supplied from direct current voltage source 10 to capacitor 13. In this case, DC/DC converter 19 operates such that capacitor 13 is charged with a constant current. Therefore, as shown in the waveform (c), the voltage of capacitor 13 rises with time. As a result, the voltage Vh that is applied to high voltage load 15 rises with time. As shown in the waveform (d), the charge current Ic flowing in capacitor 13 has a constant positive value at the time t1.

When this happens, as shown in the waveform (f), the current Ib of direct current voltage source 10, which serves as the supply source of the charge current Ic to capacitor 13, rapidly increases at the time t1, and then rises as the voltage of capacitor 13 rises. For this reason, as shown in the waveform (g), the current Id of DC/DC converter 19 also rapidly increases in the positive direction at the time t1 and then rises.

Control circuit 33 monitors the voltage Vh while capacitor 13 is being charged and stops the operation of DC/DC converter 19 if at a time t2, the voltage Vh reaches DC 30 V, which is the voltage when capacitor 13 is full-charged, as shown in the waveform (c). When this happens, after the time t2, the voltage Vh becomes constant. As DC/DC converter 19 is stopped, as shown in the waveform (d), the current Ic of capacitor 13 becomes 0, and as shown in the waveform (g), the current Id of DC/DC converter 19 also becomes 0. For this reason, as shown in the waveform (f), the current Ib of direct current voltage source 10 decreases to the current IL of low voltage load 17 since the charge current becomes 0.

Next, it is assumed that at a time t3, the steering wheel operation is carried out, and high voltage load 15 consumes a large amount of electric power in a pulsed manner. In this case, since high voltage load 15 consumes constant electric power, as shown in the waveform (a), power consumption Ph rapidly goes up to a constant value. Accordingly, as shown in Fig. 2(b), at the time t3, the current Ih of high voltage load 15 rapidly increases.

That is, in this embodiment, power consumption of high voltage load 15 is small until high voltage load 15 is driven by the steering wheel operation, however, if high voltage load 15 is driven, power consumption of high voltage load 15 rapidly increases.

Capacitor 13 discharges electric power to high voltage load 15, and the voltage thereof decreases with time. For this reason, while the voltage Vh of high voltage load 15 also decreases with time, as shown in the waveform (b), the current Ih of high voltage load 15 rises with time. Therefore, power consumption Ph of high voltage load 15, which is the product of the voltage Vh and the current Ih becomes constant, as shown in the waveform (a).

With this operation, as shown in the waveform (d), the current Ic of capacitor 13 flows in the negative direction and decreases with time. As indicated by the arrow of Fig. 1, when the current flows from capacitor 13 to direct current voltage source 10, that is, when capacitor 13 is charged, the direction of the current is defined to be positive, and thus the current decreases with time at the time of discharge, as shown in the waveform (d). Meanwhile, since the absolute value increases with time, the absolute current value from high voltage load 15 to capacitor 13 rises with time.

The current Ib is also supplied from direct current voltage source 10 to high voltage load 15. Therefore, as shown in the waveform (f), the current Ib of direct current voltage source 10 rapidly increases at the time t3 and then rises with time. At the time t3, since DC/DC converter 19 is stopped, as shown in the waveform (g), the current Id of DC/DC converter 19 is maintained at 0.

In this state, after a time t4, if high voltage load 15 continues to consume constant electric power, in the known configuration, the voltage of capacitor 13 continues to decrease, as indicated by a dotted line in the waveform (c). Therefore, in order to continue to supply constant electric power so as to fill the shortage in the voltage, as indicated by a dotted line in the waveform (d), the absolute value of the current Ic of capacitor 13 continues to rise. When this happens, as indicated by a dotted line in the waveform (f), the current Ib of direct current voltage source 10 also continues to rise. As a result, if the current Ib reaches the limit, a necessary current may not be obtained, and high voltage load 15 may not be driven. For this reason, an increase in the burden imposed on direct current voltage source 10 may adversely affect the lifespan, and thus reliability may be degraded.

In this embodiment, a prescribed value Ibs (for example, 100 A) is determined with a margin with respect to the limited current value (for example, 120 A) of the current Ib of direct current voltage source 10. Control is performed such that if the current Ib becomes equal to or more than the prescribed value Ibs, DC/DC converter 19 is activated so as to supply electric power from capacitor 13 to direct current voltage source 10. The details of this operation will be described below.

If the time t4 is reached, as indicated by a solid line in the waveform (f), it is assumed that the current Ib of direct current voltage source 10 has reached the prescribed value Ibs. Control circuit 33 monitors the current Ib by using current sensor 39. Therefore, if the current Ib becomes equal to or more than the prescribed value Ibs, control circuit 33 performs alternate on/off control of first switching element 27 and second switching element 29 so as to activate DC/DC converter 19. In this case, control circuit 33 adjusts an on/off ratio such that the current Ib becomes the prescribed value Ibs. As a result, the current Ib that is output from direct current voltage source 10 has a constant value of the prescribed value Ibs. With this operation, since there is no case where direct current voltage source 10 outputs the current within the limited current value, the burden is lightened, and high reliability is obtained.

In order to set the current Ib to the prescribed value Ibs, essentially, capacitor 13 needs to supply the amount of the rise in the current indicated by a dotted line of the waveform (f). For this reason, DC/DC converter 19 operates such that electric power is supplied from capacitor 13 to direct current voltage source 10. As a result, as indicated by a solid line in the waveform (g), the absolute value of the current Id of DC/DC converter 19 increases with time in the negative direction. When this happens, as indicated by a solid line in the waveform (d), the current Ic of capacitor 13 flows by the current Id more than it does in the related art (dotted line). For this reason, as indicated by a solid line in the waveform (c), since the voltage of capacitor 13 decreases faster than it does the related art (dotted line), the voltage Vh that is applied to high voltage load 15 also decreases faster than the decrease up to the time t4. However, since the absolute value of the current Ic increases by the decreased amount of the voltage Vh, constant electric power Ph necessary to drive high voltage load 15 is maintained, as shown in the waveform (a). Therefore, the burden imposed on direct current voltage source 10 can be lightened, and high voltage load 15 can continue to be driven.

With this operation, while the burden imposed on direct current voltage source 10 is lightened, the burden imposed on capacitor 13 increases. Accordingly, an electric double layer capacitor that has a large capacity and has excellent rapid charge/discharge characteristics is used as capacitor 13. This is because, in the electric double layer capacitor, even if a larger current than the known configuration is discharged, rapid discharge is possible, there is a margin at the time of large capacity discharge, consequently, at the time of discharge to near 0 V, and discharge to near 0 V will rarely affects the lifespan adversely. Therefore, even if the operation from the time t4 to a time t5 is carried out, the burden imposed on capacitor 13 is not so much.

Next, it is assumed that at the time t5, the operation of high voltage load 15 stops. The stopping of the operation may be made known, for example, by a signal generated from high voltage load 15. When this happens, control circuit 33 stops the operation of DC/DC converter 19. As a result, as shown in the waveform (a), power consumption Ph of high voltage load 15 first substantially becomes 0, and as shown in the waveform (b), the current Ih of high voltage load 15 also substantially becomes 0. Accordingly, as indicated by the solid line in the waveform (c), the voltage Vh that is applied to high voltage load 15 is maintained at the voltage when the operation of high voltage load 15 stops (the time t5). Since the operations of high voltage load 15 and DC/DC converter 19 are stopped, discharge of capacitor 13 also stops. Therefore, as shown in the waveform (d), the current Ic of capacitor 13 also becomes 0. As DC/DC converter 19 stops, as shown in the waveform (g), the current Id also becomes 0. When this happens, the currents Ih, Ic, and Id substantially become 0. As a result, as shown in the waveform (f), the current Ib of direct current voltage source 10 is supplied only to low voltage load 17, and the current value thereof becomes IL.

The state after the time t5 is substantially the same as that at the time t0. Therefore, if the operations after the time t1 are repeatedly carried out, sufficient electric power can continue to be supplied to high voltage load 15.

With the above-described configuration and the operations, when electric power is supplied to high voltage load 15, electric power can be supplied from capacitor 13 not only to high voltage load 15, but also to direct current voltage source 10. Therefore, it is possible to realize an electric power source device in which the burden imposed on direct current voltage source 10 can be lightened, and necessary electric power can be supplied to high voltage load 15.

In this embodiment, at the time t4, the current Ib of direct current voltage source 10 is detected by current sensor 39. Alternatively, the current Ih of high voltage load 15 may be detected. In this case, referring to the waveform (b) and the waveform (f), since the current Ih and the current Ib are associated with each other, at the time t4, a prescribed value (called Ihs) of the current Ih corresponding to the prescribed value Ibs may be determined in advance, and if the current Ih reaches the prescribed value Ihs, DC/DC converter 19 may be activated.

The activation of DC/DC converter 19 at the time t4 may be controlled by the voltage Vh of high voltage load 15. Although in this embodiment, the activation of DC/DC converter 19 is controlled by the output of current sensor 39, since high voltage load 15 consumes constant electric power, as shown in the waveform (b) and the waveform (c), the current Ih and the voltage Vh of high voltage load 15 are inversely proportional to each other. Accordingly, with respect to the prescribed value Ihs of the current Ih, a prescribed value (called Vhs) of the voltage Vh may be determined in advance. Therefore, control circuit 33 may detect the voltage Vh of high voltage load 15 by first input/output terminal 21, and activate DC/DC converter 19 if the voltage Vh reaches the prescribed value Vhs.

If direct current voltage source 10 has an internal resistance value, the flow of the current Ib in direct current voltage source 10 causes a voltage drop. The voltage drop is detected so as to estimate the current Ib. That is, control circuit 33 may detect the voltage Vb of direct current voltage source 10 from second input/output terminal 23, and when the voltage Vb becomes equal to or less than a prescribed value (called Vbs), may estimate that the current Ib becomes equal to or more than the prescribed value Ibs. Therefore, DC/DC converter 19 may be controlled to be activated at that time. With this configuration, current sensor 39 is not needed, and thus the circuit configuration can be further simplified.

Like this embodiment, when the power consumption pattern of high voltage load 15 is known in advance, the time t4 at which DC/DC converter 19 is activated in order to reduce the current Ib of direct current voltage source 10 is known. Therefore, the activation control of DC/DC converter 19 may be performed by time management of control circuit 33.

When the current consumption Ih is known by the internal circuit of high voltage load 15, high voltage load 15 may directly control the current Id of DC/DC converter 19 so as to reduce the current Ib of direct current voltage source 10. With this configuration, current sensor 39 is not needed, and thus the circuit configuration can be further simplified.

In this embodiment, control is performed such that DC/DC converter 19 is activated only during the period from the time t1 to t2 and from the time t4 to t5 of Fig. 2 and is stopped during other periods. During the stop period, however, on the condition that the current Id of DC/DC converter 19 becomes 0, first switching element 27 and second switching element 29 may be driven so as to continue to operate DC/DC converter 19. When this happens, as shown in the waveform (f), at the time t1 or t3, DC/DC converter 19 can be operated in a highly responsive manner to the rapid increase in the current Ib of direct current voltage source 10.

In this embodiment, as shown in the waveform (e), a case where the current IL of low voltage load 17 is constant has been described. When the current IL changes, control may be performed as follows. Since DC/DC converter 19 is a bidirectional type, when the current IL of low voltage load 17 is small, DC/DC converter 19 is operated in a direction to charge capacitor 13. When the current IL is large, DC/DC converter 19 is operated in a direction to discharge capacitor 13. In addition, when the current Ih of high voltage load 15 increases, control is performed such that the current Id of DC/DC converter 19 becomes negative. When the current Ih is small, control is performed such that the current Id becomes positive. With this configuration, control can be performed such that the change of the current Ib of direct current voltage source 10 is suppressed with respect to the change of the current IL or Ih.

In this embodiment, a case where a battery for a vehicle is used as direct current voltage source 10 has been described. Alternatively, an AC adapter or the like may be used which rectifies an alternating current power source so as to generate a direct current voltage source. In this case, direct current generator 11 corresponds to an alternating current power source, and rectifier 11b corresponds to a rectifier circuit.

### Second Embodiment

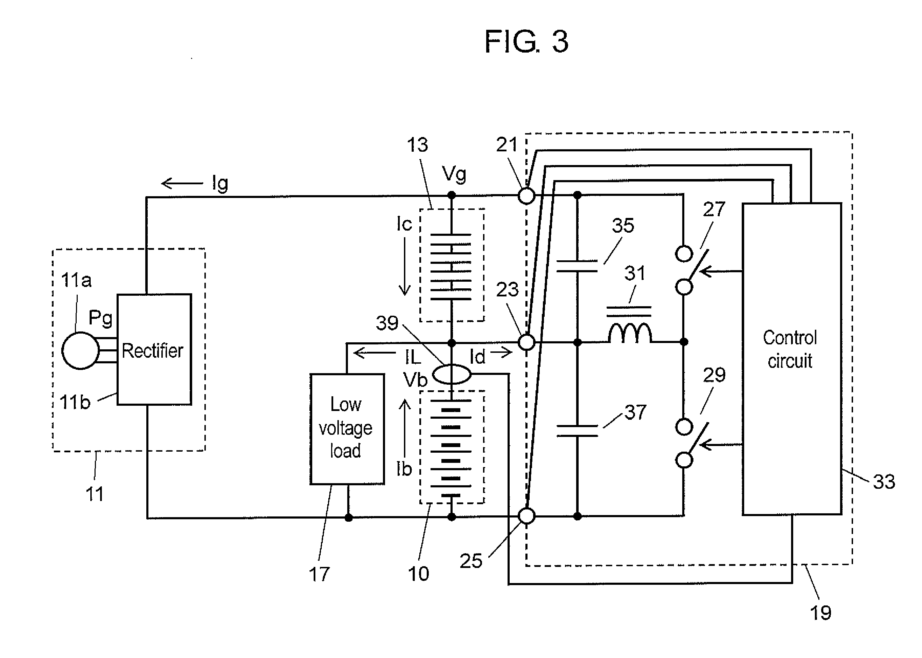

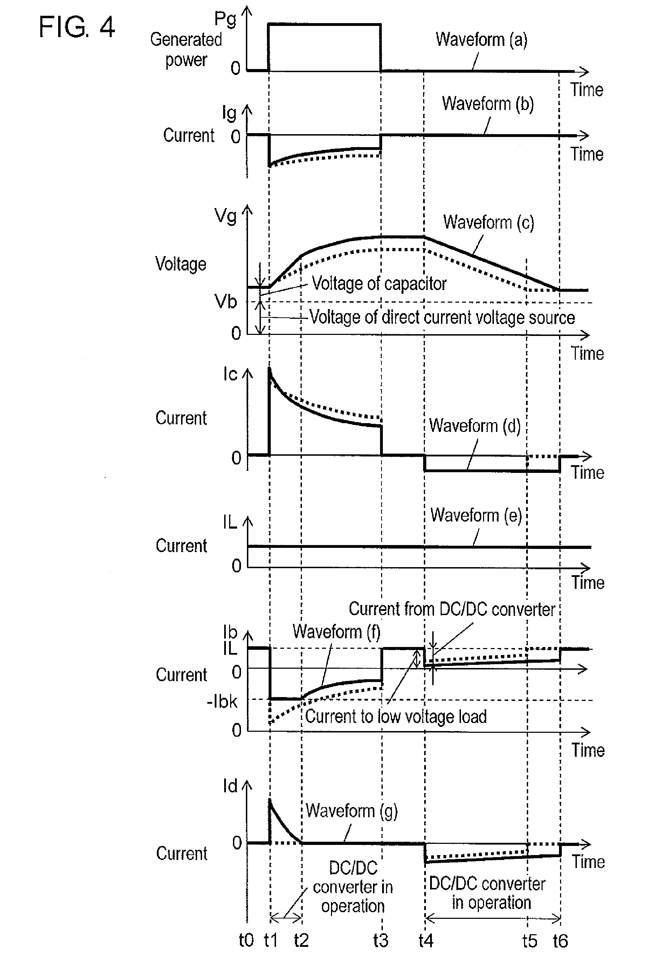

Fig. 3 is a block circuit diagram of an electric power source device according to a second embodiment of the invention. Fig. 4 is a diagram illustrating time-dependent changes in electric power, voltage, and current of the electric power source device of this embodiment. In Fig. 4, a waveform (a) shows a time-dependent change of generated power Pg of a direct current generator. A waveform (b) shows a time-dependent change of a current Ig of the direct current generator. A waveform (c) shows a time-dependent change of a voltage Vg of the direct current generator. A waveform (d) shows a time-dependent change of a current Ic of a capacitor. A waveform (e) shows a time-dependent change of a current IL of a low voltage load. A waveform (f) shows a time-dependent change of a current Ib of a direct current voltage source. A waveform (g) shows a time-dependent change of a current Id of a DC/DC converter. In Fig. 3, the same parts as those in Fig. 1 are represented by the same reference numerals, and detailed descriptions thereof will be omitted. The meaning or definition of each arrow in Fig. 3 is the same as that in Fig. 1. In this embodiment, a description will be provided for a car equipped with a vehicle braking energy recovery system.

In Fig. 3, this embodiment has a feature in that direct current generator 11 recovering vehicle braking energy is connected to both end of a series circuit of direct current voltage source 10 and capacitor 13. With this configuration, direct current voltage source 10 and capacitor 13 can be charged at the same time. Although in this embodiment, a case where no high voltage load 15 is provided will be described, high voltage load 15 may be provided, as in the first embodiment. In this case, the operation follows the combination of the operation of the first embodiment and the operation of this embodiment, which will be described below.

Next, the operation of the electric power source device of this embodiment will be described with reference to Fig. 4. In the waveforms (a) to (g) of Fig. 4, the horizontal axis denotes time.

First, at the time t0, it is assumed that the brake operation is not carried out while the vehicle is running as normal. Therefore, as shown in the waveform (a), generated power Pg of direct current generator 11 substantially becomes 0. For this reason, as shown in the waveform (b), the current Ig of direct current generator 11 also substantially becomes 0.

In this case, capacitor 13 is controlled so as not to become completely discharged in order that a negative voltage is not applied to an electric double layer capacitor constituting capacitor 13. Therefore, at the time t0, capacitor 13 stores electric power to some extent, and thus the voltage of capacitor 13 has a certain value. Direct current voltage source 10 is a battery, and thus it always has a constant voltage Vb (for example, DC 12 V). Then, as shown in the waveform (c), the voltage Vg of direct current generator 11 becomes the sum of the voltage Vb of direct current voltage source 10 and the voltage of capacitor 13. In this state, since capacitor 13 is not charged/discharged, as shown in the waveform (d), the current Ic of capacitor 13 is 0.

Low voltage load 17 continues to be normally operated, and thus as shown in the waveform (e), the current IL of low voltage load 17 becomes constant without being affected by the time. The supply source of the current IL is only direct current voltage source 10 since the current Ic of capacitor 13 is 0, as described above, and in this state, DC/DC converter 19 is also stopped. Therefore, as shown in the waveform (f), the current Ib of direct current voltage source 10 becomes equal to the current IL of low voltage load 17. Though the details will be described below, DC/DC converter 19 operates when electric power recovered by capacitor 13 at the time of braking is charged in direct current voltage source 10, and when electric power is supplied from direct current voltage source 10 to capacitor 13 when direct current generator 11 generates electric power.

As described above, since DC/DC converter 19 is stopped, as shown in the waveform (g), the current Id of DC/DC converter 19 is 0. It is assumed that the current Id of DC/DC converter 19 is a current flowing in second input/output terminal 23.

Next, it is assumed that at the time t1, the brake operation is carried out, and direct current generator 11 converts braking energy into electric power (generates electric power). In this case, in this embodiment, it is assumed that direct current generator 11 generates constant electric power. For this reason, generated power Pg rapidly rises to a constant value, as shown in the waveform (a). When this happens, as shown in the waveform (b), the current Ig of direct current generator 11 rapidly increases in the negative direction at the time t1.

That is, in this embodiment, a small amount of generated power is produced until direct current generator 11 is driven by the brake operation and generates electric power; however, if direct current generator 11 is rapidly driven by the brake operation and generates electric power, a large amount of generated power is produced.

Capacitor 13 is charged with generated power from direct current generator 11, and the voltage thereof rises with time after the time t1. For this reason, while the voltage Vg of direct current generator 11 rises with time, the absolute value of the current Ig of direct current generator 11 approaches 0 with time, as shown in the waveform (b). Therefore, generated power Pg of direct current generator 11 that is the product of the voltage Vg and the current Ig becomes constant, as shown in the waveform (a).

With this operation, the current Ic of capacitor 13 largely flows in the positive direction and then decreases with time, as shown in the waveform (d).

Electric power of direct current generator 11 is also charged in direct current voltage source 10. Therefore, as shown in the waveform (f), the current Ib rapidly increases in the negative direction at the time t1, and then the absolute value of the current Ib approaches 0 with time. As shown in the waveform (e), direct current voltage source 10 constantly continues to supply the constant current IL to low voltage load 17. Therefore, a difference between the current that is input from direct current generator 11 to direct current voltage source 10 and the constant current IL is charged in direct current voltage source 10 as the current Ib.

In this case, if the absolute value of the current Ib read by current sensor 39 is equal to or more than the absolute value (Ibk) of a prescribed value, control circuit 33 performs alternate on/off control of first switching element 27 and second switching element 29. When this happens, DC/DC converter 19 is activated in a direction in which electric power is supplied from direct current voltage source 10 to capacitor 13. The prescribed value is determined in advance so as to have a margin with respect to the limited charge current of direct current voltage source 10 (the current value flowing when DV 16 V, which is the maximum charge voltage of direct current voltage source 10 is applied). In the waveform (f), the prescribed value is negative, -Ibk. This is because, as indicated by an arrow in Fig. 3, the current Ib of direct current voltage source 10 is defined to be positive at the time of discharge, and to be negative at the time of charge.

Control circuit 33 adjusts the on/off ratio of first switching element 27 and second switching element 29 so as to perform control such that a current -Ib to be input to direct current voltage source 10 becomes the prescribed value -Ibk. For this reason, as indicated by a solid line in the waveform (f), there is no case where the current -Ib exceeds the prescribed value -Ibk in the negative direction. Therefore, the charge current can be suppressed. For this reason, the burden imposed on direct current voltage source 10 can be lightened, and reliability can be improved. A dotted line in the waveform (f) shows a case where DC/DC converter 19 is not operated. In this case, the current -Ib approaches the limited charge current, and thus there is a high possibility that the lifespan of direct current voltage source 10 will be adversely affected.

At the time t1, if DC/DC converter 19 is activated, as shown in the waveform (g), the current Id of DC/DC converter 19 largely flows in the positive direction. This current is supplied from first input/output terminal 21 to capacitor 13 by DC/DC converter 19. For this reason, an excessive charge current to direct current voltage source 10 is caused to substantially flow in capacitor 13 by DC/DC converter 19. Therefore, the burden imposed on direct current voltage source 10 is lightened, and the burden imposed on capacitor 13 increases. However, as described in the first embodiment, since an electric double layer capacitor that has a large capacity and has excellent rapid charge/discharge characteristics is used as capacitor 13, the burden imposed on capacitor 13 is not so much.

Thereafter, as shown in the waveform (c), the voltage of capacitor 13 is charged and rises. Meanwhile, as shown in the waveform (a), generated power Pg is constant, and as shown in the waveform (b), the current Ig of direct current generator 11 approaches 0 with time. In this case, when DC/DC converter 19 is operated, as indicated by a solid line in the waveform (c), the voltage of capacitor 13 has a large slope, as compared with a case (the dotted line in the waveform (c)) where DC/DC converter 19 is not operated. This is because an excessive charge current to direct current voltage source 10 is charged in capacitor 13. As a result, as indicated by a solid line in the waveform (b), the current Ig of direct current generator 11 approaches 0 fast, as compared with a case (the dotted line in the waveform (b)) where DC/DC converter 19 is not operated. As indicated by a solid line in the waveform (d), the current Ic of capacitor 13 at the time t1 increases and then decreases fast, as compared with a case (the dotted line in the waveform (d)) where DC/DC converter 19 is not operated.

Next, as indicated by a solid line in the waveform (f), it is assumed that at the time t2, the current -Ib of direct current voltage source 10 goes from the prescribed value -Ibk to 0, and the absolute current value decreases. In this case, control circuit 33 stops the operation of DC/DC converter 19. As a result, as shown in the waveform (g), the current Id of DC/DC converter 19 becomes 0, and the absolute value of the current Ib and the current Ic (the solid line in the waveform (d)) of capacitor 13 decrease with time. For this reason, as indicated by the solid line in the waveform (b), the absolute value of the current Ig of direct current generator 11 continues to decrease. Therefore, as indicated by the solid line in the waveform (c), the voltage Vg of direct current generator 11 continues to rise with time.

Thereafter, it is assumed that at the time t3, the brake operation ends, and the generation of electric power of direct current generator 11 stops. When this happens, first, as shown in the waveform (a), generated power Pg of direct current generator 11 substantially becomes 0, and as shown in the waveform (b), the current Ig of direct current generator 11 also substantially becomes 0. Accordingly, as indicated by the solid line and the dotted line in the waveform (c), the voltage Vg of direct current generator 11 is maintained at the voltage when the generation of electric power of direct current generator 11 stops (the time t3). Since the generation of electric power of direct current generator 11 and the operation of DC/DC converter 19 are stopped, the charge to capacitor 13 stops. Therefore, as shown in the waveform (d), the current Ic of capacitor 13 also becomes 0. Since DC/DC converter 19 is already stopped at the time t2, as shown in the waveform (g), the current Id is also maintained at 0. When this happens, since the currents Ig, Ic, and Id substantially become 0, as shown in the waveform (f), the current Ib of direct current voltage source 10 is supplied only to low voltage load 17, similarly to the time t0 to t1, and the current value becomes IL.

At the time t3 to t4, generated power of direct current generator 11 is very low. For this reason, in this state, control circuit 33 charges braking energy stored in capacitor 13 in direct current voltage source 10 with a constant current. When this happens, braking energy that cannot be charged in direct current voltage source 10 is steadily charged from capacitor 13 with a constant current. Therefore, a very efficient recovery system can be realized. In this case, the operation is as follows.

On the condition that the brake operation is not carried out and generated power Pg of direct current generator 11 is very low (the time t4), control circuit 33 operates DC/DC converter 19 so as to supply electric power of capacitor 13 to direct current voltage source 10. Specifically, control circuit 33 reads the voltage (corresponding to Vg) of first input/output terminal 21, and performs alternate on/off control of first switching element 27 and second switching element 29 until the voltage reaches the lower limit discharge voltage (the same voltage as at the time t0) of capacitor 13. Accordingly, electric power is supplied from capacitor 13 to direct current voltage source 10. In this case, as described above, DC/DC converter 19 operates such that direct current voltage source 10 is charged with a constant current. Therefore, as indicated by the solid line or the dotted line in the waveform (c), the voltage of capacitor 13 decreases linearly. As a result, the voltage Vg of direct current generator 11 also decreases with time. As shown in the waveform (d), the discharge current Ic of capacitor 13 has a constant negative value at the time t4.

Accordingly, as shown in the waveform (f), the charge current Ib of direct current voltage source 10 rapidly decreases at the time t4 and then rises as the voltage of capacitor 13 decreases. For this reason, as shown in the waveform (g), the current Id of DC/DC converter 19 also rapidly increases in the negative direction at the time t4 and then rises. The current Ib of the waveform (f) is the sum of the current IL (in this case, a positive current) that is supplied from direct current voltage source 10 to low voltage load 17 and the current Id (in this case, a negative current) that is supplied from capacitor 13 to DC/DC converter 19. Therefore, the current Ib decreases at the time t4. In the waveform (f) and the waveform (g), the dotted line shows the absolute current value, which is greater than the solid line. This is because the voltage of capacitor 13 indicated by the dotted line in the waveform (c) is lower than that indicated by the solid line. That is, the lower the voltage of capacitor 13 is, the larger the current Ib or Id becomes.

Control circuit 33 monitors the voltage Vg while direct current voltage source 10 is being charged. For this reason, when DC/DC converter 19 is not operated at the time t1 to t2, as indicated by the dotted line in the waveform (c), if at the time t5, the voltage Vg reaches the lower limit discharge voltage of capacitor 13, control circuit 33 stops the operation of DC/DC converter 19. When DC/DC converter 19 is operated at the time t1 to t2, as indicated by the solid line in the waveform (c), if at a time t6, the voltage Vg reaches the lower limit discharge voltage of capacitor 13, control circuit 33 stops the operation of DC/DC converter 19. When DC/DC converter 19 is operated at the time t1 to t2, capacitor 13 can be discharged for a long time, as compared with a case where DC/DC converter 19 is not operated. This is because at the time t1 to t2, the current that cannot be charged in direct current voltage source 10 is charged in capacitor 13.

At the time t5 (the dotted line) or t6 (the solid line), after DC/DC converter 19 stops, the voltage Vg becomes the same constant voltage as that at the time t0. As shown in the waveform (d), the current Ic of capacitor 13 becomes 0, and as shown in the waveform (g), the current Id of DC/DC converter 19 also becomes 0. For this reason, as shown in the waveform (f), the current Ib of direct current voltage source 10 becomes the current IL of low voltage load 17.

The state after the time t6 is the same as that at the time t0. Therefore, if the operations after the time t1 are repeatedly carried out, generated power of direct current generator 11 can continue to be efficiently recovered.

With the above-described configuration and the operations, when generated power of direct current generator 11 is charged in direct current voltage source 10 and capacitor 13, the amount of the charge current -Ib of direct current voltage source 10 that exceeds the prescribed value -Ibk is additionally charged in capacitor 13. Therefore, it is possible to realize an electric power source device in which the burden imposed on direct current voltage source 10 is lightened, and high reliability is achieved at the time of charge.

In this embodiment, similarly to the first embodiment, instead of the current Ib of direct current voltage source 10, the current Ig of direct current generator 11 may be detected. DC/DC converter 19 may continue to be operated.

In the first and second embodiments, a case where the electric power source device is applied to the electrical power steering system and the braking energy recovery system has been described. Alternatively, the electric power source device may be applied to an idling stop system, an electrical supercharger, a hybrid system, and the like.

### INDUSTRIAL APPLICABILITY

The electric power source device of the invention lightens the burden imposed on the direct current voltage source with respect to a large amount of electric power. Therefore, it is particularly useful for an electric power source device or the like when a large change in the load or a change in the generation of electric power occurs.

## Claims

1. An electric power source device comprising:
a direct current voltage source;
a capacitor connected in series with the direct current voltage source;
a DC/DC converter having a control circuit configured to control the transfer of energy between the direct current voltage source and the capacitor; and
a load connected to both ends of a series circuit of the direct current voltage source and the capacitor,
wherein the control circuit controls the DC/DC converter to supply electric power from the capacitor to the direct current voltage source when electric power is supplied to the load.

2. The electric power source device of claim 1,
wherein the control circuit activates the DC/DC converter when a current that is output from the direct current voltage source is equal to or more than a prescribed value, and supplies electric power from the capacitor to the direct current voltage source.

3. The electric power source device of claim 1,
wherein the control circuit supplies electric power from the direct current voltage source to the capacitor by the DC/DC converter when power consumption of the load is low.

4. The electric power source device of claim 1,
wherein the DC/DC converter includes
a first switching element and a second switching element connected in series with each other, the first switching element and the second switching element being on/off controlled by the control circuit, and
an inductor, one end of which is connected to a node of the direct current voltage source and the capacitor, and the other end of which is connected to a node of the first switching element and the second switching element, and
both ends of a series circuit of the first switching element and the second switching element are connected in parallel with both ends of the series circuit of the direct current voltage source and the capacitor, and the control circuit adjusts an on/off ratio for alternate on/off control of the first switching element and the second switching element so as to control a current that is output from the direct current voltage source.

5. An electric power source device comprising:
a direct current voltage source;
a capacitor connected in series with the direct current voltage source;
a DC/DC converter having a control circuit configured to control the transfer of energy between the direct current voltage source and the capacitor; and
a direct current generator connected to both ends of a series circuit of the direct current voltage source and the capacitor,
wherein the control circuit supplies electric power from the direct current voltage source to the capacitor when the direct current generator generates electric power.

6. The electric power source device of claim 5,
wherein the control circuit activates the DC/DC converter when a current that is input to the direct current voltage source is equal to or more than a prescribed value, and supplies electric power from the direct current voltage source to the capacitor.

7. The electric power source device of claim 5,
wherein the control circuit supplies electric power from the capacitor to the direct current voltage source by the DC/DC converter when electric power generated by the direct current generator is small.

8. The electric power source device of claim 5,
wherein the DC/DC converter includes
a first switching element and a second switching element connected in series with each other, the first switching element and the second switching element being on/off controlled by the control circuit, and
an inductor, one end of which is connected to a node of the direct current voltage source and the capacitor, and the other end of which is connected to a node of the first switching element and the second switching element,
both ends of a series circuit of the first switching element and the second switching element are connected in parallel with both ends of the series circuit of the direct current voltage source and the capacitor, and
the control circuit adjusts an on/off ratio for alternate on/off control of the first switching element and the second switching element so as to control a current that is input to the direct current voltage source.

9. The electric power source device of claim 1 or 5,
wherein the capacitor is an electric double layer capacitor.

## Amended claims

### Amended claims under Art. 19.1 PCT

**1.** An electric power source device comprising:
a direct current voltage source;
a capacitor connected in series with the direct current voltage source;
a DC/DC converter having a control circuit configured to control the transfer of energy between the direct current voltage source and the capacitor; and
a load connected to both ends of a series circuit of the direct current voltage source and the capacitor,
wherein the control circuit controls the DC/DC converter to supply electric power from the capacitor to the direct current voltage source when electric power is supplied to the load.

**2.** The electric power source device of claim 1,
wherein the control circuit activates the DC/DC converter when a current that is output from the direct current voltage source is equal to or more than a prescribed value, and supplies electric power from the capacitor to the direct current voltage source.

**3.** The electric power source device of claim 1,
wherein the control circuit supplies electric power from the direct current voltage source to the capacitor by the DC/DC converter when power consumption of the load is low.

**4.** The electric power source device of claim 1,
wherein the DC/DC converter includes
a first switching element and a second switching element connected in series with each other, the first switching element and the second switching element being on/off controlled by the control circuit, and
an inductor, one end of which is connected to a node of the direct current voltage source and the capacitor, and the other end of which is connected to a node of the first switching element and the second switching element, and
both ends of a series circuit of the first switching element and the second switching element are connected in parallel with both ends of the series circuit of the direct current voltage source and the capacitor, and the control circuit adjusts an on/off ratio for alternate on/off control of the first switching element and the second switching element so as to control a current that is output from the direct current voltage source.

**5.** (Amended) An electric power source device comprising:
a direct current voltage source;
a capacitor connected in series with the direct current voltage source;
a DC/DC converter having a control circuit configured to control the transfer of energy between the direct current voltage source and the capacitor; and
a direct current generator connected to both ends of a series circuit of the direct current voltage source and the capacitor,
wherein the control circuit activates the DC/DC converter when the direct current generator generates electric power and when a current that is input to the direct current voltage source is equal to or more than a prescribed value, and supplies electric power from the direct current voltage source to the capacitor.

**6.** (Deleted)

**7.** The electric power source device of claim 5,
wherein the control circuit supplies electric power from the capacitor to the direct current voltage source by the DC/DC converter when electric power generated by the direct current generator is small.

**8.** The electric power source device of claim 5,
wherein the DC/DC converter includes
a first switching element and a second switching element connected in series with each other, the first switching element and the second switching element being on/off controlled by the control circuit, and
an inductor, one end of which is connected to a node of the direct current voltage source and the capacitor, and the other end of which is connected to a node of the first switching element and the second switching element,
both ends of a series circuit of the first switching element and the second switching element are connected in parallel with both ends of the series circuit of the direct current voltage source and the capacitor, and
the control circuit adjusts an on/off ratio for alternate on/off control of the first switching element and the second switching element so as to control a current that is input to the direct current voltage source.

**9.** (Deleted)
